(19) Europäisches Patentamt
European Patent Office
Office européen des brevets

(11) Veröffentlichungsnummer: **0 526 705 B1**

(12) # EUROPÄISCHE PATENTSCHRIFT

(45) Veröffentlichungstag der Patentschrift: **28.06.95**

(51) Int. Cl.$^{6}$: **C09K 5/00**, C10M 105/06, C07C 15/16

(21) Anmeldenummer: **92109146.8**

(22) Anmeldetag: **30.05.92**

(54) **Verwendung von substituierten Biphenylen als Wärmeübertragungsflüssigkeiten.**

(30) Priorität: **31.07.91 DE 4125261**

(43) Veröffentlichungstag der Anmeldung:
**10.02.93 Patentblatt 93/06**

(45) Bekanntmachung des Hinweises auf die Patenterteilung:
**28.06.95 Patentblatt 95/26**

(84) Benannte Vertragsstaaten:
**AT BE CH DE ES FR GB IT LI NL SE**

(56) Entgegenhaltungen:
**EP-A- 0 431 265**
**DE-A- 2 038 565**
**GB-A- 497 337**
**US-A- 2 172 391**

(73) Patentinhaber: **HÜLS AKTIENGESELLSCHAFT**

**D-45764 Marl (DE)**

(72) Erfinder: **Hons, Gerd, Dr.**
**Dorstener Strasse 455**
**W-4690 Herne 2 (DE)**
Erfinder: **Voges, Heinz-Werner, Dr.**
**Im Gorden 45**
**W-4270 Dorsten (DE)**

**EP 0 526 705 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft die Verwendung von substituierten Biphenylen der allgemeinen Formel I und II,

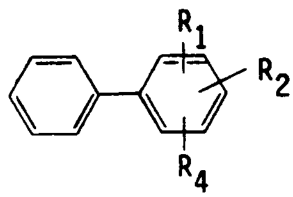

I

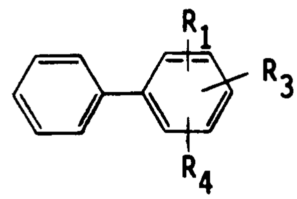

II

die zusätzlich mit substituierten Biphenylen der Formeln III und IV

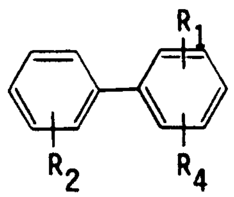

III

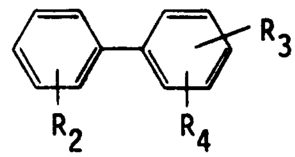

IV

gemischt sein können, als Wärmeübertragungsflüssigkeiten. In den allgemeinen Formeln stehen $R_1$ für Wasserstoff oder Ethyl, $R_2$ für Ethyl, $R_3$ für Methyl und $R_4$ für den Benzylrest.

Die erfindungsgemäßen Wärmeträgerflüssigkeiten werden nach dem Fachmann bekannten Verfahren, z. B. durch aufeinanderfolgende Ethylierung und Benzylierung von Biphenyl in Gegenwart von typischen Friedel-Crafts-Katalysatoren, hergestellt.

Wärmeübertragungsflüssigkeiten, hier in Kurzform auch Wärmeträger genannt, dienen dem Transport von Wärmeenergie zwischen thermodynamischen Systemen unterschiedlicher Temperatur.
Im Sinne dieser Erfindung sollen hier unter Wärmeträgern Flüssigkeiten verstanden werden, die eingesetzt werden, um über eine Wärmeaustauschereinrichtung einem Medium Wärmeenergie zuzuführen oder einem Medium Wärmeenergie zu entnehmen.

Im engeren Sinne betrifft die Erfindung Wärmeträger, die in einem weiten Temperaturbereich, nämlich von etwa -25 °C bis etwa 390 °C angewendet werden können. Um unter technischen Bedingungen in dem genannten breiten Temperaturbereich eingesetzt werden zu können, müssen Wärmeträger eine Reihe spezifischer Eigenschaften besitzen. Zu nennen sind:

1. hoher Siedepunkt bei Normaldruck
2. flüssiger Aggregatzustand bei den geforderten tiefen Temperaturen
3. ausgeprägte thermische Stabilität
4. geringe Oxidationsempfindlichkeit
5. gute Wärmetransport- und Wärmeübertragungseigenschaften
6. geringe Korrosionswirkung gegenüber den Apparatewerkstoffen
7. geringe Feuergefährlichkeit
8. günstige physiologische Eigenschaften (geringe Toxizität)
9. Umweltverträglichkeit
10. Regenerierbarkeit und
11. Wirtschaftlichkeit

Der am häufigsten in der Technik verwendete Wärmeträger ist Wasser, das aber aus bekannten Gründen nur in einem engen Temperaturbereich eingesetzt werden kann.
Daneben finden mineralische Öle und synthetische Wärmeträger in der Technik breite Anwendung.
Die Mineralöle können im Hochtemperaturbereich im allgemeinen nur bis zu Temperaturen von etwa 250 °C eingesetzt werden. Oberhalb von ca. 250 °C unterliegen Mineralöle in zunehmendem Maße Crackprozessen unter Bildung einerseits von gasförmigen Produkten, die andererseits mit einer Verschlammung

einhergehen. Oberhalb von 250 °C kommen die synthetischen Wärmeträger zum Einsatz. Als synthetische Wärmeträger werden beschrieben:
Diphenyl/Diphenyloxid-Gemische, partiell hydrierte Terphenyle, Benzyltoluole, Ditolylether, Arylsilicate und Phenylsilicone.

Die meisten dieser Produkte haben jedoch nur eine geringe praktische Bedeutung erlangt, weil sie hauptsächlich im Anwendungsbereich des Wassers oder der an sich preiswerteren Mineralöle arbeiten. Zudem beginnen sie sich in der Regel bei hohen Temperaturen zu zersetzen und sind dann nicht mehr regenerierbar. Andere sind zu teuer, wieder andere stellen hohe Anforderungen an den Arbeitsschutz.

Überraschend wurde nun gefunden, daß eine Flüssigkeit, bestehend aus z. B. Benzyl-ethyl-, Benzyl-ethyl-methyl-, Benzyl-diethyl-, Benzyl-diethyl-methyl- oder Benzyl-methyl-diphenyl sowie Gemischen aus diesen als Wärmeträgermedien bis zu einer Vorlauftemperatur von 370 °C und einer Filmtemperatur bis 390 °C eingesetzt werden kann.

Dies ist ein entscheidender Vorteil gegenüber den synthetischen Wärmeträgermedien (Vergleichsflüssigkeit A und B).

Gegenstand der Erfindung ist daher die Verwendung von einer oder mehreren Flüssigkeiten der allgemeinen Formel I und/oder II,

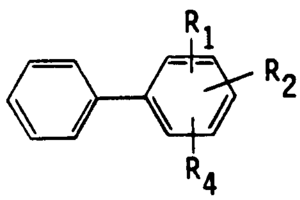
I

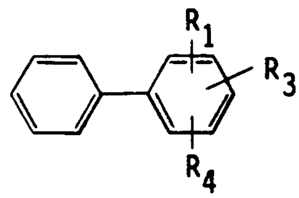
II

wobei $R_1$ = Ethyl bzw. Wasserstoff, $R_2$ = Ethyl, $R_3$ = Methyl und $R_4$ für einen Benzylrest steht, als Wärmeträgerflüssigkeit, wobei die Flüssigkeiten zusätzlich Verbindungen der allgemeinen Formeln III und/oder IV mit den genannten Bedeutungen für $R_1$ bis $R_4$ enthalten können:

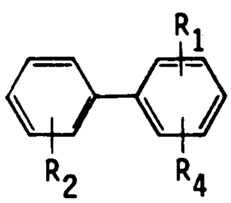
III

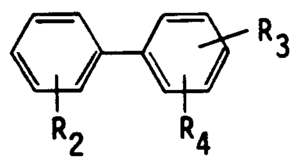
IV

Die beschriebene erfindungsgemäße Flüssigkeit hat günstige Viskositätseigenschaften im unteren Temperaturbereich wie auch eine ausgezeichnete thermische Stabilität im oberen Temperaturbereich bis ca. 370 °C Vorlauftemperatur.

Die erfindungsgemäße Flüssigkeit ist besonders dadurch charakterisiert, daß die Tendenz zur Bildung von Leicht- und insbesondere Hochsiedern außerordentlich gering ist. Hochsieder bewirken, daß sich die Wärmeübertragungseigenschaften des Wärmeträgers besonders nachteilig verändern. Im Extremfall scheiden sich die Hochsieder ab einer gewissen Konzentration infolge schlechter Löslichkeit an den Rohrwandungen des Wärmetauschers ab, verkoken dort und verschlechtern den Wärmeübergang drastisch.
Dieser Nachteil wird mit der erfindungsgemäßen Flüssigkeit im angegebenen Anwendungsbereich aufgehoben.

Ein weiterer Vorteil ist die leichte Regenerierbarkeit. Eine besonders vorteilhafte Eigenschaft der erfindungsgemäßen Flüssigkeit ist der breite Liquiditätsbereich, dessen untere Grenze bei -26 °C liegt.

Die anwendungstechnischen Vorteile der erfindungsgemäßen Flüssigkeit werden durch Vergleich mit zwei beispielhaften, bereits in der Technik eingesetzten Wärmeträgern, nämlich den teilhydrierten Terphenylen (Vergleichsflüssigkeit A) und di-benzyliertem Toluol (Vergleichsflüssigkeit B), offenbar. In Tabelle 1 sind die physikalischen Eigenschaften zusammengestellt, die bis auf gewisse Vorteile der Vergleichsflüssigkeit B im Tieftemperaturbereich (niedrigere Viskosität) und gewisse Nachteile der Vergleichsflüssigkeit B im Hochtemperaturbereich (höhere Anteile an Niedrigsiedern) noch keine besonderen Vorteile der erfindungsgemäßen Flüssigkeiten erkennen lassen.

Die signifikanten und anwendungstechnisch entscheidenden Vorteile der erfindungsgemäßen Flüssigkeit gehen aus Tabelle 2 hervor. Diese Tabelle enthält die Siedeanalysen der Wärmeträger im frischen Zustand (Originalprodukte vor Gebrauch) und nach jeweils über 500 Stunden durchgeführten Belastungstests im Stahlautoklaven bei 350, 360 und 370 °C. Die Siedeanalysen wurden gemäß ASTM 1078 durchgeführt.

Man sieht, daß sich die Vergleichsflüssigkeiten unter thermischer Belastung bedeutend stärker verändern als die erfindungsgemäße Flüssigkeit. So neigt Vergleichsflüssigkeit A stärker zur Bildung von Niedrigsiedern (thermischer Abbau, Crackprozesse) als die erfindungsgemäße Flüsigkeit, während sich in Vergleichsflüssigkeit B der Anteil an Hochsiedern viel stärker erhöht.

Die Zersetzung der Vergleichsflüssigkeiten A und B nimmt mit steigender Temperatur (350 °C → 370 °C) in viel stärkerem Maße zu, als bei der erfindungsgemäßen Flüssigkeit.

Dies wird besonders deutlich, wenn das Siedeverhalten einerseits der frischen, originalen Flüssigkeiten mit andererseits ihrem Siedeverhalten nach der über 500 h durchgeführten thermischen Belastung bei 370 °C verglichen wird, siehe Tabelle 2. Einerseits sind die Originalflüssigkeiten bis zu der Grenztemperatur der ASTM 1078 von 400 °C vollständig (erfindungsgemäße Flüssigkeit und Vergleichsflüssigkeit B) oder nahezu vollständig (Vergleichsflüssigkeit A) destillierbar. Andererseits ist (nach Behandlung bei 370 °C) die Vergleichsflüssigkeit A bis 400 °C nur zu 80 % und die Vergleichsflüssigkeit B sogar nur noch zu 60 % destillierbar, während die erfindungsgemäße Flüssigkeit zu nicht weniger als 95 % destillierbar bleibt. Diese gemäß ASTM 1078 standardisierte Siedeanalyse macht offenbar, daß sich durch die thermische Belastung bei 370 °C innerhalb von 500 h in Vergleichsflüssigkeit A ca. 20 % und in Vergleichsflüssigkeit B sogar ca. 40 % unerwünschte hochsiedende Verbindungen gebildet haben, während in der erfindungsgemäßen Flüssigkeit die Bildung solcher Hochsieder nur in vergleichsweise geringem Maße von ca. 5 % stattfindet.

Es ist damit gezeigt, daß die erfindungsgemäße Flüssigkeit auch bei 370 °C als Wärmeübertragungsflüssigkeit technisch eingesetzt werden kann, während die Vergleichsflüssigkeiten A und B einer längeren thermischen Belastung bei 370 °C nicht standhalten. Die Vorteile der höheren Thermobeständigkeit der erfindungsgemäßen Flüssigkeit gilt auch für eine um 10 °C verminderte Dauerbelastungstemperatur von 360 °C und, wenn Flüssigkeit B zum Vergleich herangezogen wird, auch noch für eine Dauerbelastungstemperatur von 350 °C, wie die Versuchsdaten der Tabelle 2 belegen.

Tabelle 1: Physikalische Eigenschaften

| Eigenschaft | erfindungsgemäße Flüssigkeit | Vergleichsflüssigkeit A | Vergleichsflüssigkeit B |
|---|---|---|---|
| Siedebereich in °C bei 10 % / 90 % gemäß ASTM 1078 | 360 / 380 | 340 / 390 | 370 / 380 |
| Flammpunkt (°C) gemäß DIN 51376 | 196 | 178 | 190 |
| Zündtemp. (°C) gemäß DIN 51794 | 415 | 374 | > 500 |
| Viskosität bei 20 °C ($mm^2/s$) gemäß DIN 51562 | 110 | 100 | 40 |
| Stockpunkt (°C) gemäß DIN 51597 | -26 | -28 | -35 |
| spezifische Wärme bei 20 °C (J/g • grd.) | 1,62 | 1,60 | 1,58 |

Vergleichsflüssigkeit A: Teilhydriertes Terphenyl
Vergleichsflüssigkeit B: Dibenzyliertes Toluol

Zusammensetzung der erfindungsgemäßen Flüssigkeit im Versuch:

| | |
|---|---|
| Benzyl-ethyl-biphenyl | 54 % |
| Ethyl-methyl-benzyl-biphenyl | 28 % |
| Benzyl-methyl-biphenyl | 3 % |
| Diethyl-benzyl-biphenyl | 15 % |

Tabelle 2: Siedeanalysen

Alle Wärmeträger wurden im Autoklaven 500 h bei den angegebenen Temperaturen getempert.

Die Auswertung erfolgt gemäß ASTM 1078.

| Vol.-% | Erfindungsgem. Flüssigkeit | | | | Vergleichsflüssigkeit A | | | | Vergleichsflüssigkeit B | | | |
|---|---|---|---|---|---|---|---|---|---|---|---|---|
| | Orig. | 350 °C | 360 °C | 370 °C | Orig. | 350 °C | 360 °C | 370 °C | Orig. | 350 °C | 360 °C | 370 °C |
| 1. Tropfen (Siedebeg.) | 342 | 114 | 110 | 115 | 338 | 100 | 95 | 95 | 348 | 102 | 102 | 102 |
| 5 | 352 | 300 | 220 | 134 | 339 | 146 | 135 | 120 | 368 | 244 | 150 | 148 |
| 10 | 357 | 345 | 337 | 348 | 340 | 314 | 230 | 210 | 372 | 302 | 250 | 250 |
| 20 | 361 | 352 | 351 | 355 | 342 | 335 | 315 | 310 | 373 | 366 | 360 | 360 |
| 30 | 361 | 360 | 357 | 356 | 343 | 340 | 332 | 325 | 374 | 374 | 369 | 375 |
| 40 | 366 | 362 | 363 | 357 | 344 | 342 | 345 | 340 | 375 | 376 | 373 | 385 |
| 50 | 368 | 364 | 368 | 358 | 345 | 345 | 347 | 346 | 376 | 377 | 375 | 390 |
| 60 | 370 | 366 | 371 | 368 | 346 | 347 | 349 | 348 | 377 | 379 | 380 | b. 400 |
| 70 | 372 | 368 | 375 | 379 | 350 | 352 | 355 | 355 | 378 | 380 | 388 | |
| 80 | 374 | 371 | 380 | 382 | 359 | 361 | 365 | b. 400 | 379 | 390 | b. 400 | |
| 90 | 378 | 376 | 390 | 395 | 383 | 385 | b. 400 | | 380 | b. 400 | | |
| 95 | 382 | 380 | 395 | b. 400 | b. 400 | b. 400 | | | 381 | | | |
| 98 | 391 | 387 | b. 400 | | | | | | 383 | | | |

## Patentansprüche

1. Verwendung von einer oder mehreren Flüssigkeiten der allgemeinen Formel I und/oder II,

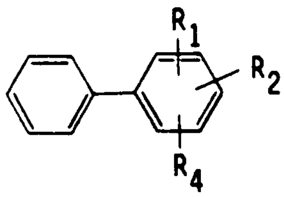

I

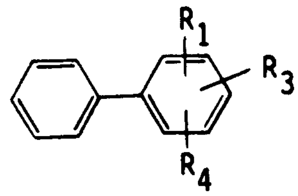

II

wobei $R_1$ = Ethyl bzw. Wasserstoff, $R_2$ = Ethyl, $R_3$ = Methyl und $R_4$ für einen Benzylrest steht, als Wärmeträgerflüssigkeit.

2. Verwendung von Flüssigkeiten gemäß Anspruch 1, die zusätzlich eine oder mehrere Verbindungen der allgemeinen Formel III und/oder IV enthalten:

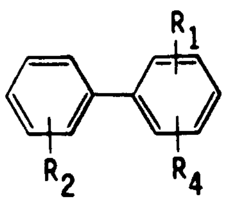

III

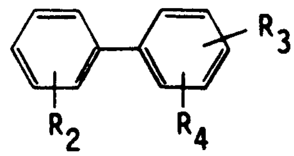

IV

wobei
$R_1$ = Ethyl bzw. Wasserstoff
$R_2$ = Ethyl
$R_3$ = Methyl
$R_4$ = Benzyl
bedeuten.

## Claims

1. Use of one or more fluids of the general formula I and/or II,

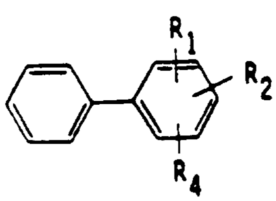

I

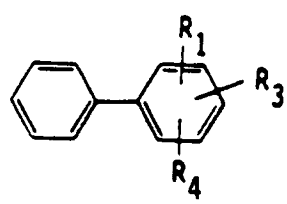

II

in which $R_1$ stands for ethyl or hydrogen, $R_2$ for ethyl, $R_3$ for methyl and $R_4$ for a benzyl radical, as heat transfer fluid.

2. Use of fluids according to claim 1, which contain additionally one or more compounds of the general formula III and/or IV:

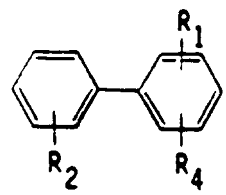

III

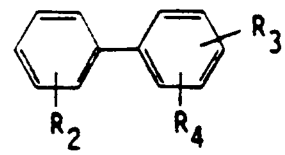

IV

in which $R_1$ stands for ethyl or hydrogen, $R_2$ for ethyl, $R_3$ for methyl and $R_4$ for benzyl.

**Revendications**

1. Utilisation, comme fluide caloporteur, d'un ou plusieurs liquides de formule générale I et/ou II

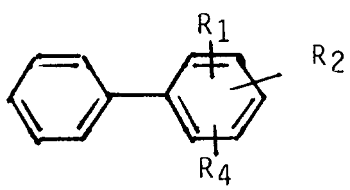

(I)

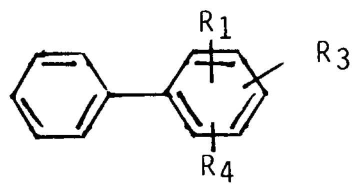

(II)

où $R_1$ est le radical éthyle ou un hydrogène, $R_2$ est le radical éthyle, $R_3$ est le radical méthyle et $R_4$ est un radical benzyle.

2. Utilisation de liquides selon la revendication 1, qui contiennent en outre un ou plusieurs composés de formule générale (III) et/ou (IV)

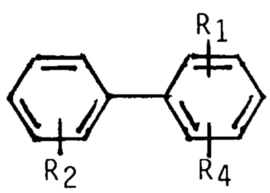

(III)

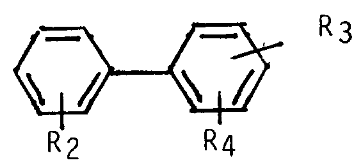

(IV)

où $R_1$ est le radical éthyle ou un hydrogène, $R_2$ est le radical éthyle, $R_3$ est le radical méthyle et R4 est le radical benzyle.